# EUROPEAN PATENT SPECIFICATION

(11) **EP 0 845 189 B1**
(45) Date of publication and mention of the grant of the patent: **17.09.2003**
(21) Application number: 97923282.4
(22) Date of filing: 09.06.1997
(51) Int. Cl.: H04N 7/10

(54) **VIDEO COMMUNICATION NETWORK**
VIDEOKOMMUNIKATIONSNETZWERK
RESEAU DE COMMUNICATION VIDEO

(30) Priority: 19.06.1996 FR 9607634
(43) Date of publication of application: 03.06.1998
(73) Proprietor: Koninklijke Philips Electronics N.V., 5621 BA Eindhoven (NL)
(72) Inventor: CHANTEAU, Pierre, NL-5656 AA Eindhoven (NL)
(74) Representative: Charpail, François
(86) International application number: IB9700664
(87) International publication number: WO97049240

(56) References cited:
- EP-A- 0 583 830
- FR-A- 2 662 895
- FR-A- 2 680 935
- IEEE COMMUNICATIONS MAGAZINE, vol. 30, no. 8, August 1992, NEW YORK, pages 58-64, XP000310949 J. TERRY: "Alternative technologies and delivery systems for broadband ISDN access"
- RADIO FERNSEHEN ELEKTRONIK, vol. 41, no. 4, 1 January 1992, pages 279-281, XP000284798 JUNGK K: "EINKABELLOESUNG 2000"

## Description

The present invention relates to a method of increasing the capacity expressed in a number of channels of a video communication signal distribution network in which a first set of video communication channels received by satellite is converted into a predetermined frequency band in order to be delivered by a distribution cable and used by at least one user apparatus capable of using channels in a predetermined frequency band.

The invention also relates to a video communication signal distribution network, comprising a distribution cable, at least one signal tapping element for supplying, from the cable, signals to at least one user apparatus capable of using channels in a predetermined frequency band, at least one converter delivering by said cable, in said predetermined frequency band, a first set of video communication channels received by satellite.

The invention likewise relates to a video communication network head-end and to a signal tapping element to be used in such a video communication signal distribution network.

A video communication signal distribution network is known from Patent EP 0 583 830. According to this document, a plurality of cables are used, each transporting different set of video communication channels, all situated in the band likely to be used by a user apparatus, and a switch at the level of the signal tapping element permitting to select the desired cable.

It is an object of the invention to simplify the realization of the network by using only a single cable which carries more channels than permitted by the band which is likely to be used by a user apparatus.

For this purpose, at least a second set of video communication channels received by satellite is converted into a frequency band situated completely above said predetermined frequency band in order to be distributed by the same distribution cable as said first set of video communication channels, and for use in a user apparatus said second set of video communication channels is restored in said predetermined frequency band..

Advantageously, for the second set of video communication channels, a frequency band is used having the same bandwidth as for the first set, and a gap is left open between the frequency band of the second set of video communication channels and the frequency band of the first set of video communication channels.

Thus, a possible frequency translation and filtering are simplified

A video communication network according to the invention comprises at least a frequency translation module for translating at least a second set of video communication channels received by satellite, into a frequency band situated completely above said predetermined frequency band, said second set of video communication channel being distributed by said cable with said first set of video communication channels, said tapping element comprising a converter module for restoring said second set of video communication channels in said predetermined band, and a switch for connecting said user apparatus either directly to the cable or to said converter module upon user request.

Preferably, a gap of at least 100 MHz is provided between the frequency band of the first set of video communication channels and the frequency band of the second set of video communication channels.

A video communication network head-end according to the invention comprises a frequency translation module for translating at least a second set of video communication channels received by satellite into a frequency band situated completely above said predetermined frequency band in order to distribute said first and second video communication channels by the same cable.

A signal tapping element according to the invention comprises a converter module for restoring said second set of video communication channels in said predetermined band, and a switch for connecting said user apparatus either directly to said cable or to said converter module upon user request.

Preferably, the value of the frequency translation provided by the translation means is at least equal to 1300 MHz.

In an advantageous embodiment, the means for switching or not the translation means into circuit are actuated either by the presence of a 14 to 18 volts control voltage, or by the presence or absence of a 22 kHz AC voltage.

French patent application 2662895 describes the translation of TV signals coming from satellites into the band 300MHz-900MHz for transmission over the distribution network to the TV receivers. At the TV receiver, these TV signals are retranslated in the band which is used by the television receiver (950MHz-1750MHz). The aim of this translation is to make it possible to use, in the distribution network, standard products developed for operating till 862MHz.

The article "Alternative Technologies and Delivery Systems for Broadband ISDN Access" published in the magazine "IEEE Communication Magazine", August 1992, pages 58-64, describes the transmission of originally different frequency bands on a single cable.

These and other aspects of the invention will be apparent from and elucidated with reference to the embodiments described hereinafter.

In the drawings:
Fig. I represents in a diagram a video communication network according to the invention;
Fig. 2 represents a variant of an embodiment of the network head-end;
Fig. 3 represents in more detail certain parts of the network of Fig. 1;
Fig. 4 is a frequency diagram of the channels found in the network according to the invention, in a first embodiment option, and
Fig. 5 is a frequency diagram of the channels found in the network according to the invention, in a second embodiment option.

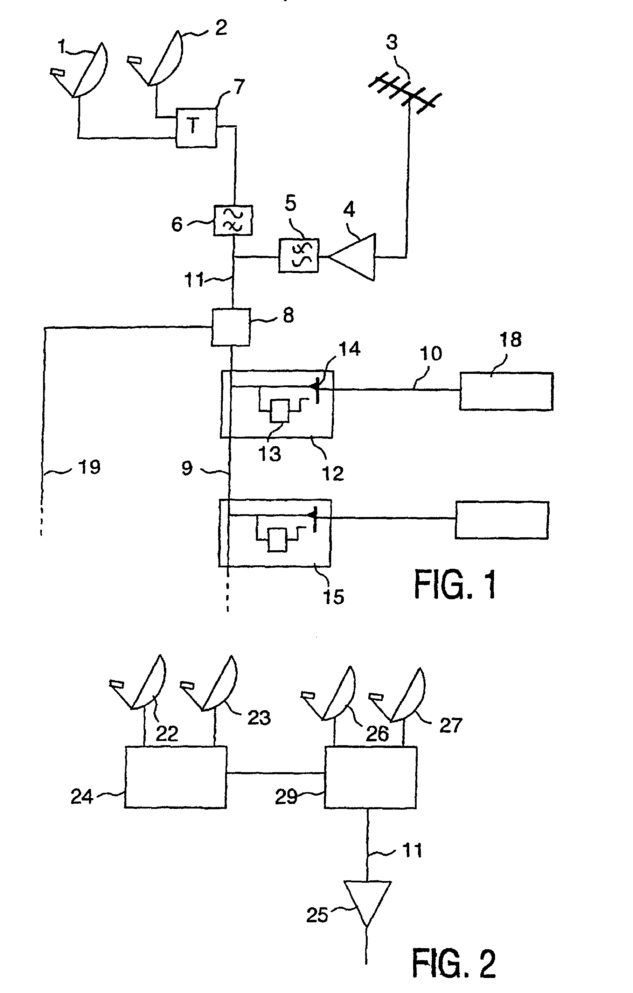

The network shown in Fig. 1 comprises a network head-end, at least one distribution cable, and at least one signal tapping element. The network head-end, shown in its simplest form here, comprises two dish antennas 1 and 2 for satellite television reception, and a module 7 for frequency translation for the dish antenna 2. The dish antennas 1 and 2 can receive each forty channels having a bandwidth of 30 MHz and have each an integrated conversion block called "LNB", producing the channels in the 950-2150 MHz frequency band. The module 7 translates the channels coming from the dish antenna 2 to form forty channels having a bandwidth of 30 MHz each, in the 2250-3450 MHz frequency band. There is a gap of 100 MHz between the top of the 950-2150 MHz band and the bottom of the 2250-3450 MHz band, to facilitate, as required, the separation between these two bands by filtering. All the channels are together applied to a cable 11, through a high-pass filter 6, which passes the frequencies higher than or equal to 950 MHz. An antenna 3 for the terrestrial channels produces channels in a band running from 47 to 860 MHz. These channels are amplified in an amplifier 4 and applied to the cable 11 via a low-pass filter 5 which passes the frequencies lower than or equal to 860 MHz. By way of example, a distributor 8 distributes the signals over the two cables 9 and 19 going downstream.

Signal tapping elements or splitters 12 (or 15, identical to 12) are connected to the cable 9, each feeding a user apparatus, for example, a receiver decoder 18 connected to the splitter 12 by a user cable 10 and capable of utilizing channels in a predetermined frequency band which is habitually the 950-2150 MHz frequency band. Each splitter contains a frequency converter module 13 which lowers the frequencies of the signals received in its input by 1300 MHz. Thus the band running from 2250 to 3450 MHz is converted to a band running from 950 to 2150 MHz, which corresponds to the band that can be used by a receiver/decoder. A switch 14 makes it possible to connect the user apparatus either directly to the cable, or to the output of the converter module 14. Thus, depending on the position of the switch, the receiver decoder will be capable of processing either directly the channels of the 950-2150 MHz band of the cable, or the channels of the 2250-3450 MHz band of the cable, converted to the 950-2150 MHz band by the converter 13.

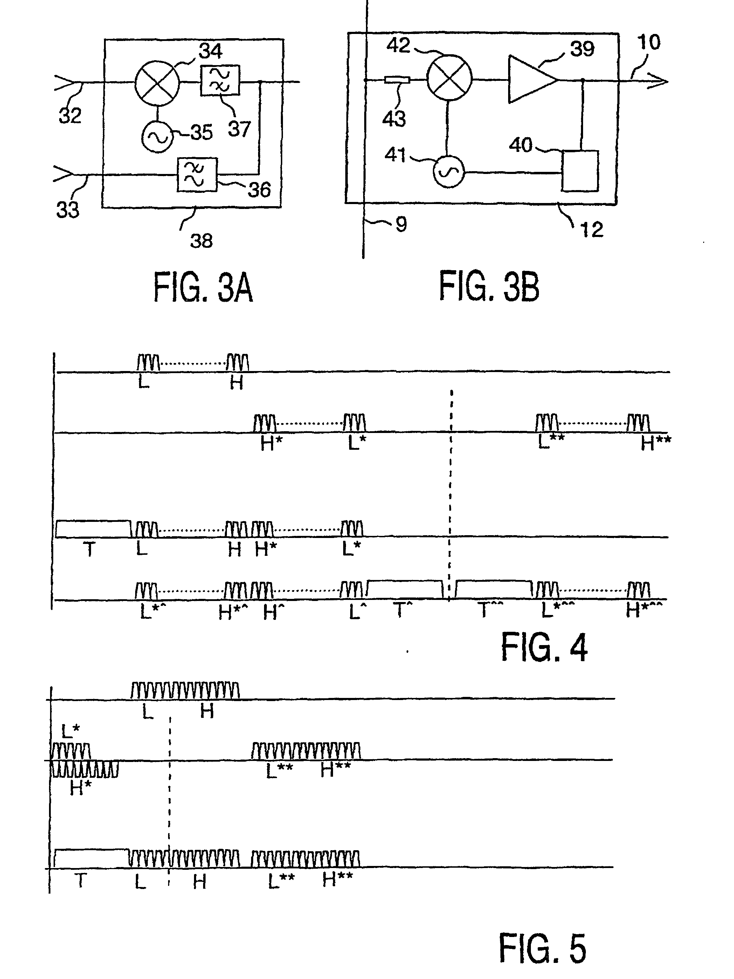

The network head-end represented in Fig. 2 forms a variant which may be used in lieu of the elements 1, 2, 7 of Fig. 1. It comprises four dish antennas 22, 23, 26, 27 comprising each a LNB which produces channels having a bandwidth of 30 MHz each in a 950-2150 MHz band. The module 24 derives forty satellite channels having each a bandwidth of 30 MHz chosen from all the channels received by the two dish antennas 22 and 23, and translates each of them into a separate channel of the 2250-3450 MHz band. The module 29 selects forty channels having each a bandwidth of 30 MHz, chosen from all the channels received by the two dish antennas 26 and 27, each in a separate channel of the 950-2150 MHz band, adds thereto the channels coming from module 24 and applies all of them to the cable 11, while all the 950-3450 MHz channels are finally amplified in an amplifier 25. As a variant, there could be a single dish antenna instead of the two dish antennas 22, 23 and/or instead of the two dish antennas 26, 27, when channels are used coming from two polarizations H and V of the same dish antenna.

Instead of starting from channels in the 950-2150 MHz band and subsequently translating them, it is also possible to convert each of the satellite channels directly to a converted frequency of the 2250-3450 MHz band, in a LNB provided for this purpose. This can be contemplated economically if the quantities are sufficient to permit the financial settlement of the development of a specific LNB.

Fig. 3A represents a transposer, for example, the one referenced 7 in the basic arrangement of Fig. 1. It receives on cable 32 the channels coming from the dish antenna 2 and on the cable 33 the channels coming from the dish antenna 1. A modulator or mixer 34 of any known type (active-circuit, Gilbert, transformer, etc.) is fed by an oscillator 35. The output signal of the mixer 34 is applied to the cable 11 via a high-pass filter 37 which passes the frequencies higher than or equal to 2250 MHz. The result of mixer 34 is that the channels arriving at the input 32 in the 2250-3450 MHz band are converted to the 950-2150 MHz band. The signal on the input 33 passes without a frequency change on cable 11, via a low-pass filter 36 which passes the frequencies lower than or equal 2150 MHz.

Fig. 3B represents an embodiment of the splitter referenced 12 in Fig. 1. A resistor 43 makes it possible to tap the whole signal coming from cable 9 in known manner while the impedance is adapted, and the tapped signal is taken to a modulator or mixer 42 of any known type (active-circuit, Gilbert, transformer, etc.). This mixer is fed by an oscillator 41. The result of the mixer is that the channels of the 2250-3450 MHz band present on cable 9 are converted to the 950-2150 MHz band. This mixer is of a model that produces shifted channels on the output, but whose incoming channels are suppressed or at least attenuated considerably. The signal on the output of the mixer 42 is amplified by an amplifier 39 and leaves by cable 10. By this cable, the user apparatus of Fig. 1 sends an information signal to indicate whether they are the channels using the upper side band of the 950-2150 MHz band of the cable which are desired, or whether they are the channels converted to the 2250-3450 MHz band. This information signal, produced by the user apparatus may, for example, consist of the fact that a DC control voltage has a value of 14 or 18 volts, or also of the fact that a 22 kHz AC voltage is present or not, or may also be an information signal of the type "DiSEqC" in which a 22 kHz AC voltage is switched to form words. The module 40, connected to cable 10, detects the information concerned and controls the oscillator 41 to operate or stop. If this oscillator is stopped, the channels of the 950-2150 MHz band pass directly, and if the oscillator is in operation, it is the channels of the 2250-3450 MHz band that are received on cable 10. This represents an alternative with respect to a switching operation which purely and simply short-circuits the converter 13 of Fig. 1.

It is the object of the Figs. 4 and 5 to illustrate the choice of the frequency of the oscillators 35 or 41. In the two Figures, the first line represents channels in the 950-2150 MHz band, such as produced by a LNB, those indicated L positioned low in the band, those indicated H positioned high in the band.

In Fig. 4, a 4400 MHz oscillator has been chosen whose frequency is indicated by a vertical broken line. The mixer 34 of Fig. 3A produces the channels indicated on the second line. The channels L and H became, respectively:
- the channels L* and H*, ranging from 2250 to 3450 MHz, by subtracting the value of the frequency from the value of 4400 MHz. The order of the channels is inverted: H* is to the left of L*.
- the channels L** and H**, ranging from 5350 to 6550 MHz, by adding the value of their frequency to the value of 4400 MHz. These channels are not annoying, and, furthermore, they have every chance of being suppressed in a natural way, because the passband of the amplifiers is limited.

The signals finally applied to cable 9 are indicated on the third line, the addition of the various channels producing a "terrestrial" band, denoted T (47-860 MHz), a L-H band (950-2150 MHz) coming, for example, from the dish antenna 1 of Fig. 1, and a band H*-L* (2250-3450 MHz) obtained by frequency translation.

The oscillator 41 of the mixer 42 is also working at 4400 MHz, and when the signals pass through this mixer, channels indicated on the fourth line are produced: the band T gives the band T^, the band H*-L* gives the band L*^-H*^, the band L-H gives the band H^-L^, with, furthermore, the corresponding bands indicated by ^^ above the frequency of the oscillator. The band L-H of the third line is stopped by the mixer. Only the band L*^-H*^, whose channels are in the right order, is likely to be used by a user apparatus.

In Fig. 5, a 1300 MHz oscillator has been chosen, that means, in the band L-H. The mixer 34 of Fig. 3A produces the channels indicated on the second line. The channels below 1300 MHz are called L, and the channels above 1300 MHz are called H. The channels L and H are the result of the subtraction of the value of 1300 MHz from the value of their frequency, the channels L* and H* ranging from 0 to 850 MHz, but with an overlap (the channels H* are indicated upside down for clarity). By adding the value of their frequency to the value of 1300 MHz, the channels L** and H** are obtained, ranging from 2250 to 3450 MHz. It will be evident that if the signals of the second line are applied to cable 9, there will be a collision between the signals L*, H* and the terrestrial signals, unless they are filtered beforehand to eliminate the band L*-H*. The frequency diagram of Fig. 4 is thus to be preferred.

It will be evident that numerous variants may be provided in the description given above, for example, the distributor 8 of Fig. 1 could also be omitted (a single cable), or, on the contrary, serve more than two cables, for example, four; the splitter casings 12, 15 could contain each, for example, two or four assemblies such as 13 + 14 to serve two or four users; the converted band could also be placed at even higher frequencies (higher than 2250-3450 MHz) to obtain a gap larger than 100 MHz between the bands; in the case of digital television channels, the 40 channels of 30 MHz could be 30 channels of 40 MHz bandwidth.

## Claims

1. A method of increasing the capacity expressed in a number of channels of a video communication signal distribution network in which a first set of video communication channels received by satellite (1) is converted into a predetermined frequency band in order to be delivered by a distribution cable (11) and used by at least one user apparatus (18) capable of using channels in a predetermined frequency band,
**characterized in that** at least a second set of video communication channels received by satellite (2) is converted into a frequency band situated completely above said predetermined frequency band in order to be distributed by the same distribution cable (11) as said first set of video communication channels, and **in that** for use in a user apparatus said second set of video communication channels is restored in said predetermined frequency band.

2. A method as claimed in Claim 1, **characterized in that** for the second set of converted channels, a frequency band is used having the same bandwidth as for the first set.

3. A method as claimed in Claim 1, **characterized in that** a gap is left open between the frequency band of the second set of converted channels and the frequency band of the first set of converted channels.

4. A video communication signal distribution network comprising a distribution cable (11), at least one signal tapping element (12, 15) for supplying, from the cable, signals to at least one user apparatus (18) capable of using channels in a predetermined frequency band, at least one converter (LNB) delivering by said cable, in said predetermined frequency band, a first set of video communication channels received by satellite (1),
**characterized in that** it comprises at least a frequency translation module (LNB, 7) for translating at least a second set of video communication channels received by satellite, into a frequency band situated completely above said predetermined frequency band, said second set of video communication channel being distributed by said cable (11) with said first set of video communication channels, said tapping element comprising a converter module (13) for restoring said second set of video communication channels in said predetermined band, and a switch (14) for connecting said user apparatus either directly to the cable or to said converter module upon user request.

5. A video communication network as claimed in Claim 4, **characterized in that** a gap of at least 100 MHz is provided between the frequency band of the first set of converted channels and the frequency band of the second set of converted channels.

6. A video communication network head-end comprising at least one satellite television broadcast converter (LNB) for converting a first set of video communication channels received by satellite (1) into a predetermined frequency band, for delivering said first set of video communication channel by a distribution cable (11) to at least one user apparatus (18) capable of using channels in said predetermined frequency band,
**characterized in that** it further comprises a frequency translation module (LNB, 7) for translating at least a second set of video communication channels received by satellite (2) into a frequency band situated completely above said predetermined frequency band in order to distribute said first and second video communication channels by the same cable (11).

7. A video communication network head-end as claimed in Claim 6, **characterized in that** the difference between the frequency band of the first set of converted channels and the frequency band of the second set of converted channels is at least 100 MHz.

8. A signal tapping element (12, 15) for supplying, from a distribution cable (11), a first set of video communication channels received by satellite (1) and converted into a predetermined frequency band, to at least one user apparatus (18) capable of using channels in said predetermined frequency band,
**characterized in that**, at least a second set of video communication channels received by satellite (2) being translated to a frequency band situated completely above said predetermined frequency band in order to be distributed by said cable (11) with said first set of video communication channels, said tapping element comprises a converter module (13) for restoring said second set of video communication channels in said predetermined band, and a switch (14) for connecting said user apparatus either directly to said cable or to said converter module upon user request.

9. A signal tapping element (12, 15) as claimed in claim 8, **characterized in that** the translation of said second set of video communication channels is at least equal to 1300 MHZ.

10. A signal tapping element (12, 15) as claimed in claim 8, **characterized in that** said switch is controlled either by the value of a continuous control voltage of 14 volt or 18 volt, or by the presence or absence of a 22kHz alternative voltage.

## Patentansprüche

1. Verfahren zum Steigern der Kapazität, ausgedrückt in einer Anzahl Kanäle eines Videokommunikationssignalverteilungsnetzwerkes, wobei ein erster Satz von einem Satelliten (1) empfangener Videokommunikationskanäle in ein vorbestimmtes Frequenzband umgewandelt wird, damit er mit Hilfe eines Verteilungskabels (11) geliefert werden kann und von wenigstens einem Benutzergerät (18) benutzt, das imstande ist Kanäle in einem vorbestimmten Frequenzband zu benutzen,
**dadurch gekennzeichnet, dass** wenigstens ein zweiter Satz von einem Satelliten (2) empfangener Videokommunikationskanäle in ein Frequenzband umgewandelt wird, das völlig über dem genannten vorbestimmten Frequenzband liegt, damit er mit Hilfe desselben Verteilungskabels (11) wie der erste Satz von Videokommunikationskanälen geliefert werden kann, und dass zur Verwendung in einem Benutzergerät dieser zweite Satz von Videokommunikationskanälen in dem genannten vorbestimmten Frequenzband neu gespeichert wird.

2. Verfahren nach Anspruch 1, **dadurch gekennzeichnet, dass** für den zweiten Satz umgewandelter Kanäle ein Frequenzband benutzt wird, das die gleiche Bandbreite hat wie für den ersten Satz.

3. Verfahren nach Anspruch 1, **dadurch gekennzeichnet, dass** zwischen dem Frequenzband des zweiten Satzes umgewandelter Kanäle und dem Frequenzband des ersten Satzes umgewandelter Kanäle ein Spalt frei gelassen wird.

4. Videokommunikationssignalverteilungsnetzwerk mit einem Verteilungskabel (11), wenigstens einem Signalabgriffelement (12, 15) um von dem Kabel Signale an wenigstens ein Benutzergerät (18) zu liefern, das imstande ist, Kanäle in einem vorbestimmten Frequenzband zu benutzen, wenigstens einem Wandler (LNB), der mit Hilfe des genannten Kabels in einem vorbestimmten Frequenzband einen ersten Satz von Videokommunikationskanälen liefert, die von Satelliten (1) empfangen worden sind,
**dadurch gekennzeichnet, dass** das Netzwerk wenigstens ein Frequenzumsetzmodul (LNB, 7) aufweist um wenigstens einen zweiten Satz von einem Satelliten empfangener Videokommunikationskanäle in ein Frequenzband umzuwandeln, das völlig über dem genannten vorbestimmten Frequenzband liegt, wobei der genannte zweite Satz von Videokommunikationskanälen durch das genannte Kabel (11) mit dem genannten ersten Satz von Videokommunikationskanälen verteilt wird, wobei das genannte Abgriffelement ein Wandlermodul (13) aufweist um den genannten zweiten Satz von Videokommunikationskanälen in dem genannten vorbestimmten Band neu zu speichern, und einen Schalter (14) zum Verbinden des genannten Benutzergeräts, und zwar entweder unmittelbar mit dem Kabel oder auf Wunsch des Benutzers mit dem genannten Wandlermodul.

5. Videokommunikationsnetzwerk nach Anspruch 4, **dadurch gekennzeichnet, dass** zwischen dem Frequenzband des ersten Satzes umgewandelter Kanäle und dem Frequenzband des zweiten Satzes umgewandelter Kanäle ein Spalt von wenigstens 100 MHz vorgesehen ist.

6. Videokommunikationsnetzwerkskopfende mit wenigstens einem Satellitenfernsehkanalwandler (LNB) zum Umwandeln eines ersten Satzes von einem Satelliten (1) empfangener Videokommunikationskanäle in ein vorbestimmtes Frequenzband, um den genannten ersten Satz von Videokommunikationskanälen durch ein Verteilungskabel (11) wenigstens einem Benutzergerät (18) zu liefern, das imstande ist, Kanäle in dem genannten vorbestimmten Frequenzband zu benutzen,
**dadurch gekennzeichnet, dass** es weiterhin ein Frequenzumsetzmodul (LNB, 7) aufweist um wenigstens einen zweiten Satz von einem Satelliten (2) empfangener Videokommunikationskanäle in ein Frequenzband umzusetzen, das völlig über dem genannten vorbestimmten Frequenzband liegt, um die genannten ersten und zweiten Videokommunikationskanäle durch dasselbe Kabel (11) zu verteilen.

7. Videokommunikationsnetzwerkskopfende nach Anspruch 6, **dadurch gekennzeichnet, dass** die Differenz zwischen dem Frequenzband des ersten Satzes umgesetzter Kanäle und dem Frequenzband des zweiten Satzes umgesetzter Kanäle wenigstens 100 MHz beträgt.

8. Signalabgriffelement (12, 15) um aus einem Verteilungskabel (11) einen ersten Satz von einem Satelliten (1) empfangener Videokommunikationskanäle, die in ein vorbestimmtes Frequenzband umgesetzt wurden, wenigstens einem Benutzergerät (18) zu liefern, das imstande ist, Kanäle in dem genannten vorbestimmten Frequenzband zu benutzen,
**dadurch gekennzeichnet, dass** wenigstens ein zweiter Satz von einem Satelliten (2) empfangener Videokommunikationskanäle in ein Frequenzband umgesetzt werden, das völlig über dem genannten vorbestimmten Frequenzband liegt, damit er mit dem genannten ersten Satz von Videokommunikationskanälen durch das genannte Kabel (11) verteilt werden kann, wobei das genannte Abgriffelement ein Umsetzermodul (13) aufweist um den genannten zweiten Satz von Videokommunikationskanälen in dem genannten vorbestimmten Band neu zu speichern, und einen Schalter (14) zum Verbinden des genannten Benutzergeräts entweder unmittelbar mit dem genannten Kabel oder auf Wunsch des Benutzers mit dem genannten Umsetzermodul.

9. Signalabgriffelement (12, 15) nach Anspruch 8, **dadurch gekennzeichnet, dass** die Übersetzung des genannten zweiten Satzes von Videokommunikationskanälen wenigstens 1300 MHz entspricht.

10. Signalabgriffelement (12, 15) nach Anspruch 8, **dadurch gekennzeichnet, dass** der genannte Schalter entweder durch den Wert einer Gleich-Steuerspannung von 14 Volt oder 18 Volt, oder durch das Vorhandensein oder das Fehlen einer 22 kHz Wechselspannung.

## Revendications

1. Procédé pour accroître la capacité exprimée en un nombre de canaux d'un réseau de distribution de signaux de communication vidéo dans lequel un premier jeu de canaux de communication vidéo reçus par satellite (1) sont convertis en une bande de fréquences prédéterminée afin d'être fournis par un câble de distribution (11) et utilisés par au moins un appareil utilisateur (18) capable d'utiliser des canaux dans une bande de fréquences prédéterminée,
**caractérisé en ce qu'**au moins un deuxième jeu de canaux de communication vidéo reçus par satellite (2) sont convertis en une bande de fréquences située totalement au-dessus de ladite bande de fréquences prédéterminée afin d'être distribués par le même câble de distribution (11) que ledit premier jeu de canaux de communication vidéo, et **en ce que**, pour utilisation dans un appareil utilisateur, ledit deuxième jeu de canaux de communication vidéo sont rétablis dans ladite bande de fréquences prédéterminée.

2. Procédé suivant la revendication 1, **caractérisé en ce que**, pour le deuxième jeu de canaux convertis, une bande de fréquences présentant la même largeur de bande que pour le premier jeu est utilisée.

3. Procédé suivant la revendication 1, **caractérisé en ce qu'**un intervalle est laissé libre entre la bande de fréquences du deuxième jeu de canaux convertis et la bande de fréquences du premier jeu de canaux convertis.

4. Réseau de distribution de signaux de communication vidéo comprenant un câble de distribution (11), au moins un élément de dérivation de signaux (12,15) pour fournir, depuis le câble, des signaux à au moins un appareil utilisateur (18) capable d'utiliser des canaux dans une bande de fréquences prédéterminée, au moins un convertisseur (LNB) fournissant par ledit câble, dans ladite bande de fréquences prédéterminée, un premier jeu de canaux de communication vidéo reçus par satellite (1),
**caractérisé en ce qu'**il comprend au moins un module de transposition de fréquence (LNB, 7) pour transposer au moins un deuxième jeu de canaux de communication vidéo reçus par satellite en une bande de fréquences située totalement au-dessus de ladite bande de fréquences prédéterminée, ledit deuxième jeu de canaux de communication vidéo étant distribués par ledit câble (11) avec ledit premier jeu de canaux de communication vidéo, ledit élément de dérivation comprenant un module convertisseur (13) pour rétablir ledit deuxième jeu de canaux de communication vidéo dans ladite bande prédéterminée, et un commutateur (14) pour connecter ledit appareil utilisateur soit directement au câble, soit audit module convertisseur sur demande de l'utilisateur.

5. Réseau de communication vidéo suivant la revendication 4, **caractérisé en ce qu'**un intervalle d'au moins 100 MHz est prévu entre la bande de fréquences du premier jeu de canaux convertis et la bande de fréquences du deuxième jeu de canaux convertis.

6. Tête de réseau de communication vidéo comprenant au moins un convertisseur de télédiffusion satellite (LNB) pour convertir un premier jeu de canaux de communication vidéo reçus par satellite (1) en une bande de fréquences prédéterminée, pour fournir ledit premier jeu de canaux de communication vidéo par un câble de distribution (11) à au moins un appareil utilisateur (18) capable d'utiliser des canaux dans ladite bande de fréquences prédéterminée,
**caractérisée en ce qu'**elle comprend en outre un module de transposition de fréquence (LNB, 7) pour transposer au moins un deuxième jeu de canaux de communication vidéo reçus par satellite (2) en une bande de fréquences située totalement au-dessus de ladite bande de fréquences prédéterminée afin de distribuer lesdits premiers et deuxièmes canaux de communication vidéo par le même câble (11).

7. Tête de réseau de communication vidéo suivant la revendication 6,
**caractérisée en ce que** la différence entre la bande de fréquences du premier jeu de canaux convertis et la bande de fréquences du deuxième jeu de canaux convertis est d'au moins 100 MHz.

8. Elément de dérivation de signaux (12, 15) pour fournir, d'un câble de distribution (11), un premier jeu de canaux de communication vidéo reçus par satellite (1) et convertis en une bande de fréquences prédéterminée à au moins un appareil utilisateur (18) capable d'utiliser des canaux dans ladite bande de fréquences prédéterminée,
**caractérisé en ce qu'**au moins un deuxième jeu de canaux de communication vidéo reçus par satellite (2) sont transposés en une bande de fréquences située totalement au-dessus de ladite bande de fréquences prédéterminée afin d'être distribués par ledit câble (11) avec ledit premier jeu de canaux de communication vidéo, ledit élément de dérivation comprend un module convertisseur (13) pour rétablir ledit deuxième jeu de canaux de communication vidéo dans ladite bande prédéterminée, et un commutateur (14) pour connecter ledit appareil utilisateur soit directement audit câble, soit audit module convertisseur sur demande de l'utilisateur.

9. Elément de dérivation de signaux (12, 15) suivant la revendication 8,
**caractérisé en ce que** la transposition dudit deuxième jeu de canaux de communication vidéo est au moins égale à 1300 MHz.

10. Elément de dérivation de signaux (12, 15) suivant la revendication 8,
**caractérisé en ce que** ledit commutateur est commandé soit par la valeur d'une tension de commande continue de 14 volts ou de 18 volts, soit par la présence ou l'absence d'une tension alternative de 22 kHz.
